# EUROPEAN PATENT SPECIFICATION

(11) **EP 0 677 799 B1**
(45) Date of publication and mention of the grant of the patent: **17.05.2000**
(21) Application number: 95105141.6
(22) Date of filing: 05.04.1995
(51) Int. Cl.: G05D 1/02

(54) **Vehicle travel aiding device**
Vorrichtung zur Fahrhilfe eines Fahrzeugs
Dispositif d'aide à la circulation d'un véhicule

(30) Priority: 15.04.1994 JP 11330694; 15.04.1994 JP 11330794; 15.04.1994 JP 11330894
(43) Date of publication of application: 18.10.1995
(73) Proprietor: HONDA GIKEN KOGYO KABUSHIKI KAISHA, Minato-ku Tokyo (JP)
(72) Inventor: Matsumoto, Yoshiyuki, Chuo, Wako-shi, Saitama (JP)
(74) Representative: Fincke, Karl Theodor, Dipl.-Phys. Dr.

(56) References cited:
- WO-A-90/02985
- WO-A-95/14939
- DE-A- 4 139 215

## Description

The present invention relates to a vehicle travel aiding device sensing running conditions of a vehicle by means of sensor means including collision risk detection and outputting vehicle travel supporting information, said information including an alarm or instructions to automatically operate braking means of the vehicle when detecting an obstruction to the vehicle or a short distance to another vehicle and/or guiding instructions for guiding the vehicle.

Japanese laid-open patent publication No. 60-91500 discloses a vehicle travel aiding device that can sense a distance from another vehicle running ahead of the vehicle the device serves and, when a measured distance becomes shorter than a proper intervehicular distance, produces an alarm and gives a command to'make an automatic brake operate to keep the proper distance.

Japanese laid-open patent publication No. 62-81591 also discloses a vehicle travel aiding device that can detect an obstacle ahead of the vehicle and produce an alarm when a distance to the obstacle becomes shorter than a specified value.

Japanese laid-open patent publication No. 4-290200 also discloses a vehicle travel aiding device that can exchange data of driving conditions such as current position, running speed and running direction between other vehicles ahead and behind of the vehicle and issues an alarm when a danger of collision may arise therebetween.

Japanese laid-open patent publication No. 63-163210 discloses a vehicle travel aiding device that determines a current location of the vehicle and indicates it along a preset travelling route on a road map indicated on a display screen and outputs a guiding instruction for turning to the right or the left at a crossing on the preset route when the vehicle is just passing a point at a specified distance from said crossing.

From DE 41 39 215 A1, a device for a vehicle is known which automatically activates a warning flasher device of the vehicle in the case of an impact or strong deceleration. The deceleration threshold value relevant to the activation of the warning flasher device is variable in dependency on environmental conditions. To this end, the conditions of operational switches of the vehicle are taken into account.

From WO 95/14939, which constitutes prior art according to Art. 54(3) EPC, a radar process and device for carrying out said process is known. On the basis of detected values referring to the distance, relative speed, relative acceleration, as well as the azimuth angle of target objects, it is estimated whether and which target objects are on a lane of a vehicle and it is determined which target objects are most dangerous. Depending on the driving behaviour of the driver, road and weather conditions, indicator, warning or intervention thresholds are determined. When distance, relative speed, and relative acceleration of the target objects exceed or fall below these thresholds, indicator, warning, or intervention signals relating to the vehicle brakes, throttle value or shift gear are generated. In particular, the radar device receives signals from certain sensors and switches to be actuated by the driver, which relate to road, weather and other conditions and the driver's driving style.

From WO 90/02985 an automatic anti-collision process and device for autonomous vehicles is known which corresponds to the preamble part of claim 1. In view of the problem that in critical traffic situations, reactions to danger because of obstacles are frequently to slow and inappropriate, the automatic anti-collision device is adapted to avoid automatically collisions by an acceleration, braking or swerving manoeuvre. To this end, vehicle- and course-related data are recorded by sensors. Ideal course signals are derived from the data and transmitted, together with data concerning an obstacle course recorded, for example, by sensors. On the basis of these data, the vehicle is controlled so as to prevent collision with the obstacle.

If vehicle travel aiding information, such as an alarm when sensing a dangerous approaching to another vehicle or a guiding instruction when the vehicle approaches a specified crossing is issued at a constant specified timing, there may be cases in which the timing is not appropriate to the driving situation of the vehicle. In certain cases the information will be issued too late or the content of the information may not be appropriate. This applies in particular to driving the vehicle during rain or at night.

It is an object of the invention to provide a vehicle travel aiding device which is adapted to output vehicle travel supporting information in an appropriate manner with respect to the content and/or the timing of the outputting of the information.

According to the invention, a vehicle travel aiding device is provided having the features of claim 1.

According to the invention, the vehicle travel aiding device comprises a means for detecting an operation state selected by a headlight switch and/or a wiper switch and control means changing a timing of outputting the vehicle travel supporting information according to the detected state of the respective switch and/or changing according to the detected state of the respective switch a content of the vehicle travel supporting information being output.

The vehicle travel aiding device according to the invention is capable of outputting vehicle travel supporting information in accordance with the surrounding brightness and/or running conditions of the vehicle relating to rain. To this end, the operation state selected by a headlight switch and/or a wiper switch is detected. In accordance with the detected operation state, the timing of the outputting of the vehicle travel supporting information and/or the content of the vehicle travel supporting information being output is changed. Accordingly, the vehicle travel supporting information may be highly appropriate to the driving conditions of the vehicle with respect to the timing of the outputting and/or with respect to the content of the information.

According to a preferred embodiment, means are provided to allow a changing of timing of outputting the vehicle travel supporting information also in dependency on the driver's ability, which is judged on the basis of a measured response time from a moment of issuing vehicle travel supporting information to a moment of detecting that the operation is being performed. This alleviates the problem that every driver may have his own response to an alarm on a short intervehicular distance or the like and, therefore, the alarm issued at a fixed timing may be too early or too late for allowing the driver to operate the vehicle's accelerator or brake in correct time.

According to a further embodiment, the vehicle travel aiding device has means to allow a changing of the timing of outputting the vehicle travel supporting information also in dependency on the detected road conditions.

### Brief Description of the Drawings

Figure 1 is a construction block diagram of a vehicle travel aiding device embodying the present invention.

Figure 2 a flow chart showing a procedure of determining a status depending upon an operation mode of a light switch.

Figure 3 is a flow chart showing a procedure of producing an alarm by comparing a measured intervehicular distance with a corrected reference value depending upon an operation mode of a light switch.

Figure 4 is a construction block diagram of another vehicle travel aiding device embodying the present invention.

Figure 5 is a flow chart of procedure of determining a status of a vehicle depending upon an operation mode of a wiper switch.

Figure 6 is a flow chart showing a procedure of producing an alarm by comparing a measured intervehicular distance with a corrected reference value depending upon an operation mode of a wiper switch.

Figure 7 is a construction block diagram of another vehicle travel aiding device embodying the present invention.

Figure 8 is a construction block diagram of another vehicle travel aiding device embodying the present invention.

### Description of the Preferred Embodiment

The preferred embodiments of the present invention will now be described in detail by way of example and with reference to the accompanying drawings.

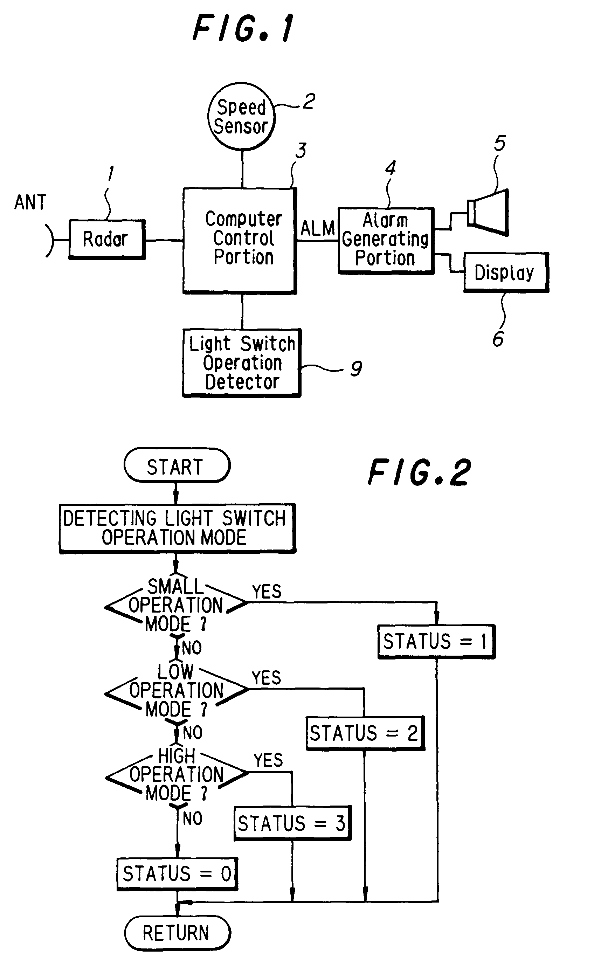

Figure 1 shows an embodiment of a vehicle travel aiding device which gives an alarm by sensing a degree of approach of the vehicle to a preceding vehicle.

The vehicle travel aiding device comprises a radar 1 (e.g., a FM-CW type radar) for measuring a distance to a preceding vehicle and a relative running speed; a speed sensor 2 for detecting a running speed of the vehicle for which the device serves; a computer control portion 3 that determines a proper distance from the preceding vehicle by calculation from the relative running speed detected by the radar 1 and the running speed detected by the speed sensor 2, compares the current intervehicular distance with the determined proper (reference) distance and generates an alarm instruction signal ALM if the current distance is shorter than the calculated proper distance; and an alarm generating portion 4 that according to the alarm instruction signal ALM generates alarm on the short intervehicular distance by using a speaker 5 and a display 6. In Fig. 1, ANT designates a radar antenna.

The radar 1 senses a distance from a precedent vehicle and a relative running speed according to a known conventional method and the computer control portion 3 determines a proper intervehicular distance according to a known conventional method.

In the thus constructed device, an improvement according to the present invention is made to provide a light-switch operation detector 9 that detects which one of operation modes OFF, SMALL, LOW BEAM, HIGH BEAM is selected by a light-operation mode selecting switch to determine a status of brightness which may have an influence on a forward visibility of a driver of the vehicle and to provide control means that changes a timing of outputting an alarm instruction signal ALM.

When the light switch operation portion 9 detects the light switch set at OFF, the computer control portion 3 judges that the vehicle is running in the daytime, and gives the alarm instruction ALM at an ordinary timing when the detected distance from the preceding vehicle is shorter than the proper intervehicular distance determined according to a specified calculating procedure.

With the light switch detected at the SMALL position, the computer control portion 3 judges it is dim and gives the alarm instruction ALM at a timing advanced by one step, while with the light switch detected at the LOW BEAM position, the computer control portion 9 judges it is night or dark in a tunnel and gives the alarm instruction ALM at a timing advanced by two steps. With the light switch detected at the HIGH BEAM position, the computer control portion 3 judges it is pith-dark and gives the alarm instruction ALM at a timing advanced by three steps.

In practice, correction factors k1 for correcting a proper intervehicular distance at respective status levels 0 (OFF), 1 (SMALL), 2 (LOW BEAM) and 3 (HIGH BEAM) of the light switch are prepared as shown below in Table 1 and used for correction of a proper intervehicular distance determined by the same calculation procedure in such a way that-one of the correction factors is selected according to the present operation mode of the light switch and a proper intervehicular distance L is multiplied by the selected correction factor to get a corrected proper distance value L' as shown below in an expression (1).

**Table 1**

| STATUS | Correction Factors Kl |
|---|---|
| 0 | 1.0 |
| 1 | 1.1 |
| 2 | 1.2 |
| 3 | 1.3 |

$\text{L' = L * k1}$ where L' is a corrected proper intervehicular distance.

The correction factors are selected in such a way that a proper intervehicular distance that is determined on the condition that the light switch is set at OFF position may be increased by 1.1 times with the light switch set at SMALL, 1.2 times with the light switch at LOW BEAM and 1.3 times with the light switch at HIGH BEAM.

Figure 2 shows a flow chart for determining a status according to an operation mode of the light switch.

When the light switch is set at SMALL or LOW BEAM or HIGH BEAM position, the proper intervehicular distance is corrected to be correspondingly increased and, therefore, a timing of giving the alarm instruction ALM when an actual distance is shorter than the corrected proper distance may be correspondingly (step by step) advanced.

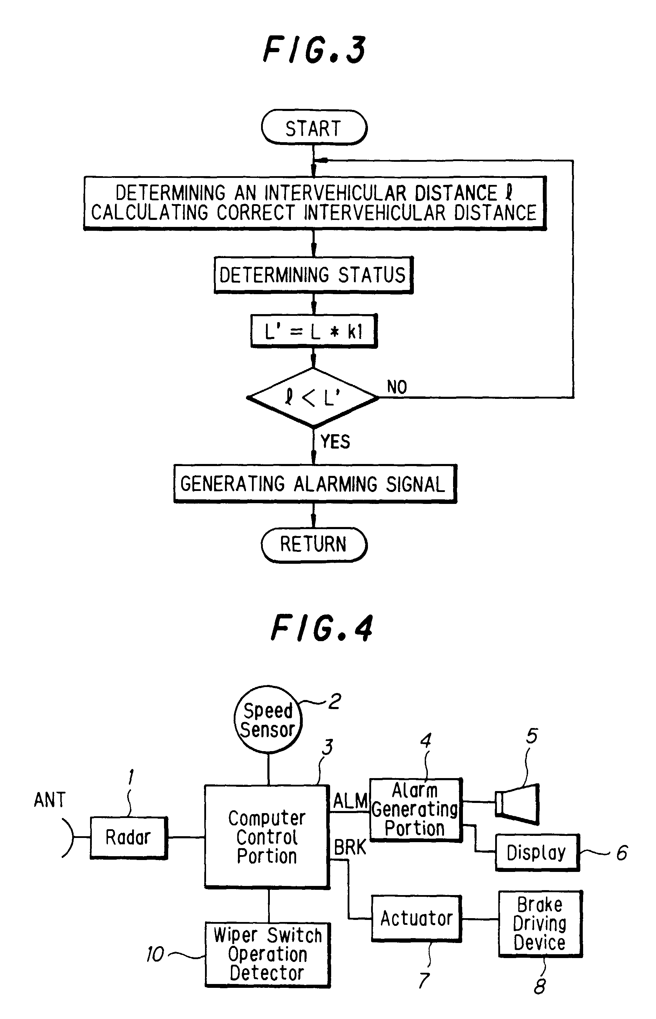

Figure 3 is a flow chart for generating an alarm by comparing the corrected proper intervehicular distance L' with a measured intervehicular distance ℓ.

In a vehicle travel aiding device (not shown) which can detect a distance from any obstruction (besides a preceding vehicle) ahead on a road by using an obstruction detecting radar and give an alarm when the detected distance from the obstruction is smaller than a specified threshold value, the present invention may be applied to enable the vehicle to sense a current operation mode SMALL or LOW BEAM or HIGH BEAM of a light switch and correct the threshold value to be correspondingly increased for the detected mode to stepwise change a timing of generating an alarm.

In a vehicle travel aiding device which can search and indicate a current location of the vehicle on a road map indicated on a display screen and give an instruction of turning to the right or the left when the vehicle is passing a point at a specified distance from a crossing existing ahead on a travelling course preset on the road map, the present invention may be applied to enable the vehicle to sense a current operation mode SMALL or LOW BEAM or HIGH BEAM of a light switch and correct the distance to the crossing to be correspondingly increased for the detected mode, thereby advancing a timing of giving said guiding instruction.

Besides changing a timing of issuing a vehicle travel aiding information, e.g., as an alarm on a short intervehicular distance or an obstruction and a travel guiding information according to an operation mode selected by the light switch, the present invention can also enable every device to judge there is no vehicle running ahead on a road when the light switch is set at HIGH BEAM (this judgment is made by the computer operation portion 3 of the shown embodiment) and switch off its radar for a while for saving its battery consumption and, furthermore, to change a content of aiding information when no coming-on vehicle under the same operation mode of the light switch.

Figure 4 shows an embodiment of a vehicle travel aiding device which is capable of outputting an alarm on approaching to a preceding vehicle and giving an instruction for driving an automatic brake.

The vehicle travel aiding device comprises a radar 1 (e.g., a FM-CW type radar) for measuring a distance from a precedent vehicle and a relative running speed; a speed sensor 2 for detecting a running speed of the vehicle for which the device serves; a computer control portion 3 that determines a proper distance from the preceding vehicle by calculation from the relative running speed detected by the radar 1 and the running speed detected by the speed sensor 2, compares the current intervehicular distance with the determined proper distance and generates an alarm instruction ALM and an automatic brake driving instruction BRK to keep a necessary intervehicular distance if the current distance is shorter than the calculated proper distance; an alarm generating portion 4 that, according to the alarm instruction signal ALM, generates an alarm on the short intervehicular distance by driving a speaker 5 and an display 6; and an actuator 7 for driving a brake driving device 8 according to the automatic brake driving instruction BRK. In Fig. 4, ANT designates a radar antenna.

In the thus constructed device, an improvement according to the present invention is made to provide a wiper-switch operation detector 10 for detecting which one of operation modes PERIODICAL, SLOW and FAST is selected by a wiper-operation mode switch and determining a status of weather which may have an influence on a forward visibility of a driver and running condition of the vehicle (for example, a braking distance is an object to control), and computer control means 3 for changing a timing of outputting an alarm instruction ALM and an automatic brake driving instruction BRK according to the detected operation mode of the wiper switch.

When the wiper switch operates periodically, the device judges it is drizzling and advances by one step a timing of giving the alarm information ALM and an automatic brake driving instruction BRK. When the wiper is moving slowly, the device judges it is lightly raining and, therefore, advances by two steps a timing of giving the alarm instruction ALM and a braking instruction BRK. When the wiper is moving fast, the device judges it is raining heavily and, therefore, advance by three steps a timing of giving the alarm instruction ALM and a braking instruction BRK.

In practice, correction factors k2 for a proper intervehicular distance at respective statuses 0 (OFF), 1 (PERIODICAL), 2 (SLOW) and 3 (FAST) of the wiper switch are prepared as shown below in Table 2 and used for correction of a proper intervehicular distance determined by the same calculation procedure in such a way that one of the correction factors is selected according to the present operation mode of the wiper switch and the proper intervehicular distance value L is multiplied by the selected correction factor k2 to get a corrected reference distance value L'' as shown below in an expression (2).

**Table 2**

| STATUS | Correction Factors K2 |
|---|---|
| 0 | 1.0 |
| 1 | 1.1 |
| 2 | 1.2 |
| 3 | 1.3 |

$\text{L'' = L * k2}$ where L'' is a corrected proper intervehicular distance.

The correction factors are selected in such a way that the proper intervehicular distance determined when wiper does not move may be increased by 1.1 times when the wiper operating PERIODICALLY, 1.2 times when the wiper operating SLOWLY and 1.3 times when the wiper operating FAST.

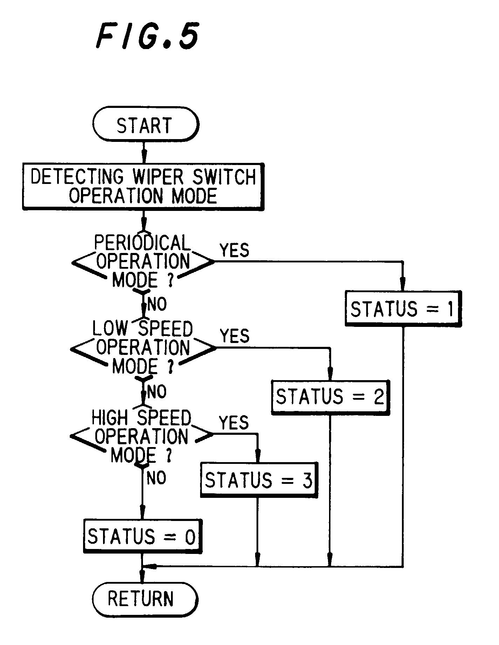

Figure 5 shows a flow chart for determining a status according to an operation mode of the wiper switch.

When the wiper operates periodically (status 1) or slowly (2) or fast (3), the proper intervehicular distance is corrected to be correspondingly increased and, therefore, a timing of giving the alarm instruction ALM and the automatic brake driving instruction BRK when an actual distance is shorter than the corrected proper distance may be correspondingly (step by step) advanced.

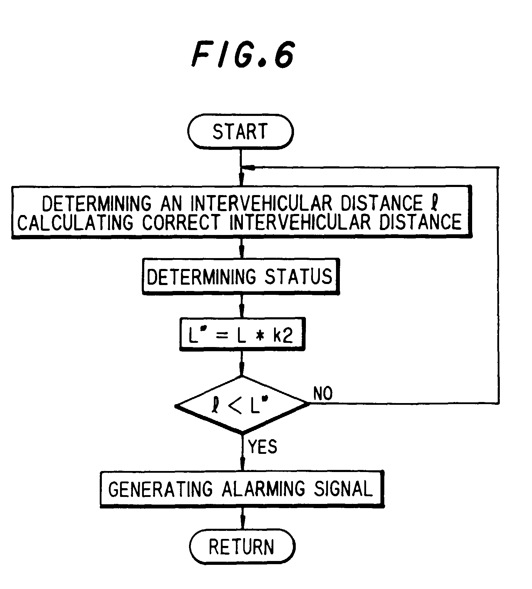

Figure 6 is a flow chart for generating an alarm by comparing an actually measured intervehicular distance ℓ with the corrected proper intervehicular distance L''.

In a vehicle travel aiding device (not shown) which can detect a distance from any obstruction (besides a preceding vehicle) ahead on a road by using an obstruction detecting radar and give an alarm when the detected distance from the obstruction is smaller than a specified threshold value, the present invention may be applied to enable the vehicle to sense a current operation mode PERIODICAL or SLOW or FAST of a wiper switch and to correct the threshold value to be correspondingly increased for the detected mode, thereby stepwise changing a timing of generating an alarm.

In a vehicle travel aiding device which can search and indicate a current location of the vehicle on a road map indicated on a display screen and give an instruction of turning to the right or the left when the vehicle is passing a point at a specified distance from a crossing existing ahead on a travelling course preset on the road map, the present invention may be applied to enable the vehicle to sense a current operation mode PERIODICAL or SLOW or FAST of a wiper switch and to correct the distance to the crossing to be correspondingly increased for the detected mode, thereby advancing a timing of giving the guiding instruction.

Besides changing a timing of issuing a vehicle travel aiding information such as an alarm on a short intervehicular distance or an obstruction and a travel guiding information according to an operation mode selected by the wiper switch, the present invention can also enable every vehicle to stepwise lower a response of an accelerator and a response of a steering handle for an driver's operation amount exceeding the specified value by using respective adjusting means for preventing slippage of the vehicle in a rainy day at an emergency braking or steering.

It is also possible to stepwise increase loudness of an audio alarm on a short intervehicular distance or of a guiding speaker according to respective operation modes of the wiper switch to assure the necessary loudness in a rainy day, especially in heavy rain.

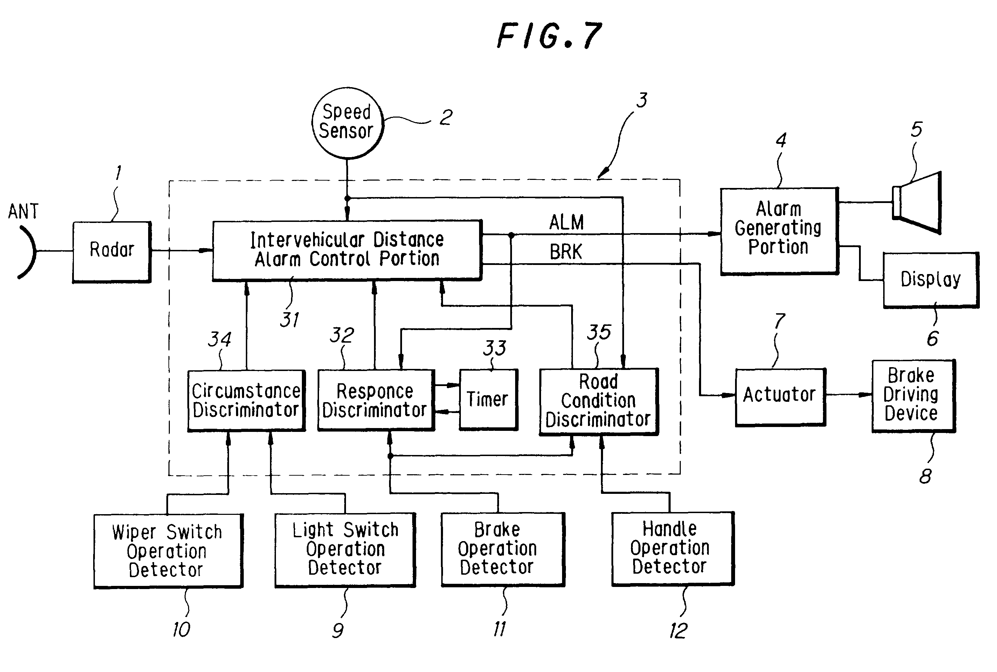

Figure 7 shows an embodiment of a vehicle travel aiding device which is capable of outputting an alarm on approaching to a preceding vehicle and giving an instruction for operating an automatic brake.

The vehicle travel aiding device comprises a radar 1 (e.g., a FM-CW type radar) for measuring a a distance from a preceding vehicle and a relative running speed; a speed sensor 2 for detecting a running speed of the vehicle for which the device works; a computer control portion 3 (intervehicular distance alarm control portion 31) that determines a proper distance from the preceding vehicle by calculation from the relative running speed detected by the radar 1 and the running speed detected by the speed sensor 2, compares the current intervehicular distance with the determined proper distance and generates an alarm instruction ALM when the detected current distance becomes shorter than the calculated proper distance; an alarm generating portion 4 that, according to the alarm instruction signal ALM, generates an alarm on the short intervehicular distance by driving a speaker 5 and a display 6 and an actuator 7 of a brake driving device 8 according to the automatic brake driving instruction BRK. In Fig. 7, ANT designates a radar antenna.

In the device thus constructed, an improvement according to the present invention is made by providing the computer control portion 3 with sensing means for sensing braking operation for which the intervehicular distance alarm aid is made, means for judging a response of a driver by measuring a duration from the time of issuing an alarm to the time of detecting a braking operation, means for detecting circumstances of the vehicle, means for sensing road conditions and means for changing a timing of outputting an alarm instruction ALM and a automatic brake driving instruction BRK according to the detected response of the driver, circumstances and road conditions.

In practice, as shown in Fig. 7, a brake operation detector 11 detects that a brake pedal of the vehicle has just been stepped on and a response discriminator 32 of the computer control portion 3 measures a time from the moment of issuing an alarm to the moment of detecting a braking operation by using a timer 33. The response discriminator 32 discriminates a responding state of the driver by averaging the measured values and generates an instruction for changing an alarm outputting timing according to the determined responding state of the driver and transfers it to an intervehicular distance alarm control portion 31 that in turn outputs an alarm instruction ALM and automatic brake driving instruction BRK at a suitable timing.

When a response time of, e.g., 1.2 seconds is taken as a standard, the response discriminator 32 judges a driver response is fast or late if a measured response time is not more than 1.0 second or not less than 1.4 seconds and gives a timing change instruction to the intervehicular distance alarm control portion 31 so that the portion may output an alarm instruction ALM and an automatic brake driving instruction BRK at a timing delayed or advanced by a specified value.

The intervehicular distance alarm control portion 31 has prepared correction factors that may decrease and increase a basically calculated proper intervehicular distance by 20 percent and the other respectively at fast and slow response of the driver. The intervehiclular distance alarm control portion 31 corrects the basically calculated proper intervehicular distance by multiplying by a correction factor selected according to the instruction received from the response discriminator 32.

As shown in Fig. 7, a wiper switch operation detector 10 detects a "periodical" or "slow" or "fast" operation mode selected by the wiper switch and a circumstance discriminator 34 of the computer control portion 3 judges weather having an influence on the visibility and running conditions of the vehicle according to the detected wiper-operation-mode and gives the intervehicular distance alarm control portion 31 an instruction for changing an output timing.

When the wiper switch operates periodically, the circumstance discriminator 34 judges it is drizzling and gives an output-timing change instruction to the intervehicular distance alarm control portion 31 to advance by one step a timing of giving the alarm information ALM and an automatic brake driving instruction BRK. When the wiper is working slowly, the device judges it is raining lightly and gives an output-timing change instruction to advance by two steps a timing of giving the alarm information ALM and a automatic brake driving instruction BRK. When the wiper is moving fast, the device judges it rains heavily and generates an output-timing change instruction to advance by three steps a timing of giving the alarm instruction ALM and a automatic brake driving instruction BRK.

The intervehicular distance alarm control potion 31 has preset correction factors usable for increasing the calculated proper intervehicular distance by 10 percent at the periodical operation mode of the wiper, 30 percent at the slow operation mode and 50 percent at the fast operation mode. This alarm control portion 31 corrects the calculated intervehicular distance by multiplying by a correction factor selected according to an instruction received from the circumstance discriminator 34.

This feature makes it possible to stepwise discriminate weather by detecting a selected operation mode of the wiper without using a rainfall sensor.

As shown in Fig. 7, a light switch operation detector 9 detects a "small" or "low beam" or "high beam" operation mode selected by the light switch and the circumstance discriminator 34 of the computer control portion 3 judges spatial brightness having an influence on a visibility and running conditions of the vehicle according to the detected operation mode of a light switch and gives the intervehicular distance alarm control portion 31 an instruction for changing an output timing.

With the light switch detected at the SMALL position, the circumstance discriminator 34 of the computer control portion 3 judges it is dim and instructs the intervehicular distance alarm control portion 31 to advance its alarm output timing by one step, while with the light switch detected at the LOW BEAM position, the circumstance discriminator 34 judges it is night or dark in a tunnel and instructs the intervehicular distance alarm control portion 31 to advance its alarm output timing by two steps. With the light switch detected at the HIGH BEAM position, the circumstance discriminator 34 judges it is pith-dark and instructs the intervehicular distance alarm control portion 31 to advance its alarm output timing by three steps.

The intervehicular distance alarm control potion 31 has preset correction factors usable for increasing the calculated proper intervehicular distance by 10 percent at the SMALL operation mode of the light switch, 30 percent at the LOW BEAM operation mode and 50 percent at the HIGH BEAM operation mode. This alarm control portion 31 corrects the calculated intervehicular distance by multiplying by a correction factor selected according to an instruction received from the circumstance discriminator 34.

This feature makes it possible to stepwise discriminate weather by detecting a selected operation mode of the light switch without using a brightness sensor.

As shown in Fig. 7, a handle operation detector 12 detects an steering angle exceeding a specified value by using a steering angle sensor or direction sensor and generates a handle operation detection signal which is transferred together with detection signals of the speed sensor 2 and the brake operation detector 11 to a road condition discriminator 35 of the computer control portion 3 that in turn judges what kind of a road, e.g., a mountain road or a superhighway the vehicle is running on the basis of the received detection signals and instructs the intervehicular distance alarm control portion 31 to change its output timing.

In practice, the road condition discriminator 35 determines a handle operation frequency for a specified travel distance from handle operation detection signals and examines whether the determined value exceeds a given threshold, determines a brake operation frequency for a specified travel distance from brake operation detection signals and examines whether the determined value exceeds a given threshold or not and, then, determines an average running speed of the vehicle from speed detection signals and examines whether the determined value exceeds a given threshold.

When both the handle operation frequency and the brake operation frequency exceed the respective thresholds, the road condition discriminator 35 judges the road to be a mountain road and instructs the intervehicular distance alarm control portion 31 to output an alarm instruction ALM and an automatic brake driving instruction BRK at a timing advanced by a specified corresponding step value.

When the brake operation frequency is low and the average speed exceeds the given threshold, the road condition discriminator 35 judges the road to be a superhighway and instructs the intervehicular distance alarm control portion 31 to outputs an alarm instruction ALM and an automatic brake instruction BRK at a timing advanced by a specified corresponding step value.

The intervehicular distance alarm control portion 31 has a preset correction factor usable for increasing the calculated proper intervehicular distance by 20 percent in case of the road being a mountain road or a superhighway and corrects the calculated intervehicular distance by multiplying by a correction factor selected according to the instruction received from the road condition discriminator 35.

As a basically calculated proper intervehicular distance is thus corrected according to the respective discrimination results as to the diver's response, circumstances and road conditions, a timing of giving an alarm instruction ALM and an automatic brake driving instruction BRK, which is determined based on the result of comparison of an actually detected intervehicular distance with a corrected proper distance, can be correspondingly changed.

Table 3 shows correction factors to be used for correcting a basically calculated proper intervehicular distance according to the driver's response, circumstances and road conditions.

**Table 3**

| | | | |
|---|---|---|---|
| Response | Fast 0.8 (decreased by 20% ) | Slow 1.2 (increased by 20%) | |
| Weather | Drizzling 1.1 (increased by 10%) | Light Rain 1.3 (increased by 30%) | Heavy Rain 1.5 (increased by 50%) |
| Brightness | Dim 1.1 (increased 10%) | Dark 1.2 (increased by 20%) | Pitch-dark 1.5 (increased by 50%) |
| Road Conditions | Mountain road 1.2 (increased by 20%) | Highway 1.2 (increased by 20%) | |

The intervehicular distance alarm control portion 31 synthetically examines output-timing change instructions separately received from the response discriminator 32, the circumstance discriminator 34 and the road condition discriminator 35, performs calculations according to a given procedure and finally decides a timing of issuing an alarm instruction ALM and automatic brake driving instruction BRK in the following manner:

For example, when a vehicle is driven by a driver having a fast response (corresponding to a correction factor of -20%) in a heavy rain (a factor +50%) at night (a factor +20%), a basically calculated proper intervehicular distance is increased by 50%(-20 + 50 + 20), thereby a timing of outputting an alarm instruction ALM and an automatic brake driving instruction BRK is advanced by 50% in comparison with an ordinary timing. When the vehicle is driven by the driver having a fast response (-50%) on a mount road (+20%) in a fine day, the proper intervehicular distance is not changed (-20% + 20%=0%), thereby an alarm instruction ALM and an automatic brake operation instruction BRK are outputted at the ordinary timing. Other cases are processed in the similar way as the above-mentioned examples.

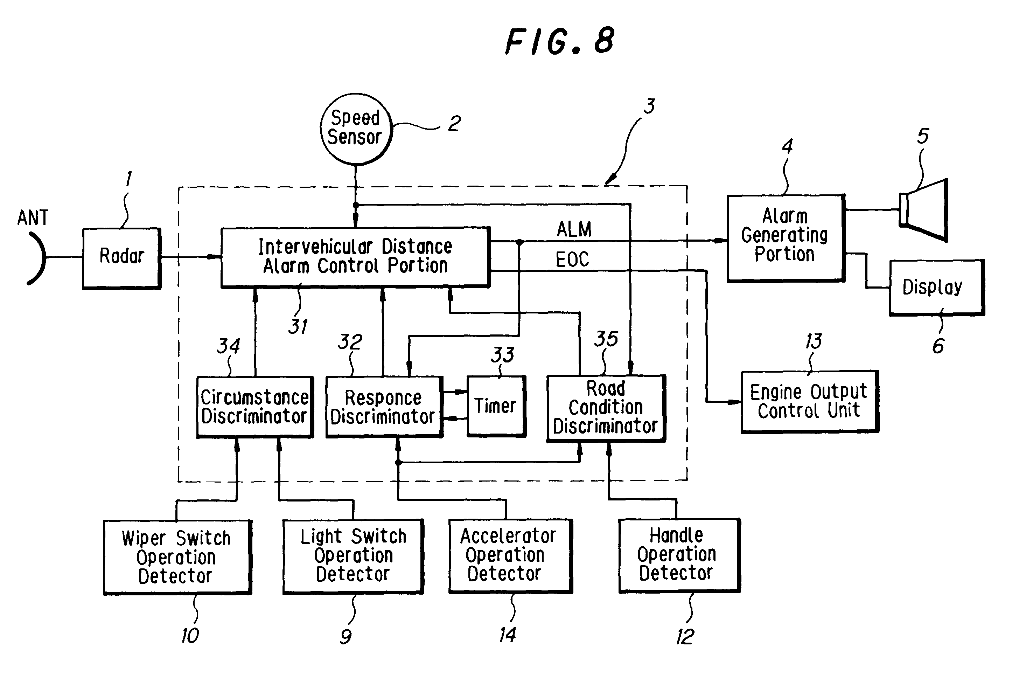

Figure 8 shows another embodiment of the present invention, which further includes an accelerator operation detector 14 and, similarly with the afore-described embodiment, a response discriminator 32 judges a response ability of a driver by measuring a time interval between the moment of issuing an alarm instruction ALM to the moment of releasing an accelerator, determines an accelerator operation frequency for a specified running distance from detection signals from the accelerator operation detector 14 and examines whether the determined frequency exceeds a given threshold value or not.

In this embodiment, the intervehicular distance alarm control portion 31 gives an engine output control instruction EOC to an engine output control unit to forcibly reduce rotations of the vehicle's engine (instead of automatic braking instruction) at the time of issuing an intervehicular distance alarm.

In a vehicle travel aiding device (not shown) which can detect a distance from any obstruction (besides a preceding vehicle) ahead of the vehicle on a road by using an obstruction detecting radar and give an alarm when the detected distance from the obstruction is smaller than a specified threshold value, the present invention may be applied to enable the device to synthetically estimate results of discrimination of a driver's response, circumstances and road conditions and corrects the threshold value to optimally changing a timing of generating an alarm.

In a vehicle travel aiding device which can search and indicate a current location of the vehicle on a road map indicated on a display screen and give an instruction of turning to the right or the left when the vehicle is passing a point at a specified distance from a crossing existing ahead on a travelling course preset on the road map, the present invention may be applied and enable the device to synthetically estimate results of discrimination of a driver's response ability, circumstances and road conditions and correct the threshold value to optimally change a alarm generating timing.

As described above, the present invention provides a vehicle travel aiding device for generating a vehicle travel aiding information such as an alarm on a short distance from another vehicle to assure safe travelling, a guiding instruction at a crossing and so on, which can stepwise senses a degree of surrounding brightness (darkness) influencing the visibility of sight ahead of the vehicle by detecting an operation mode selected by a light switch (without using any brightness sensor and A-D converter) and output a supporting information at an optimal timing or with an optimal content according to the detection result.

The present invention provides a vehicle travel aiding device for generating a vehicle travel supporting information such as an alarm on a short distance from another vehicle to assure safe travelling, a guiding instruction at a crossing and so on, which can stepwise senses weather conditions influencing the visibility of sight ahead of the vehicle by detecting a wiper operation mode (without using any rainfall sensor and A-D converter) and output a supporting information at an optimal timing or with an optimal content according to the detection result.

The present invention provides a vehicle travel aiding device for detecting running conditions of the vehicle and generating a vehicle travel aiding information such as an intervehicular distance alarm and other travel guiding information according to the detected conditions, which can judge a driver's responding ability by measuring a response time of his operation, discriminate a degree of separately detected circumstances and road conditions and change a timing of outputting every supporting information based on a synthetic judgment of the discrimination results, thereby issuing the supporting information at an optimal timing with due consideration of the driver's ability, circumstances and road conditions.

## Claims

1. Vehicle travel aiding device sensing running conditions of a vehicle by means of sensor means (1, 2) including collision risk detection and outputting vehicle travel supporting information, said information including
- an alarm or instructions to automatically operate braking means (8) of the vehicle when detecting an obstruction to the vehicle or a short distance to another vehicle and/or
- guiding instructions for guiding the vehicle
characterized by
- means (9, 20) for detecting an operation state selected by a headlight switch and/or a wiper switch and
- control means (3; 31) changing a timing of outputting the vehicle travel supporting information according to the detected state of the respective switch and/or changing according to the detected state of the respective switch a content of the vehicle travel supporting information being output.

2. Vehicle travel aiding device according to claim 1, further comprising means (32) for detecting a driver's operation and judging a driver's operative response by measuring a time interval from a moment of issuing vehicle travel supporting information to a moment of detecting that the operation is performed,
said control means (31) changing a timing of outputting the vehicle travel supporting information also in dependence of the judged response of the driver's operation.

3. Vehicle travel aiding device according to claim 2, further comprising means (35) for detecting road conditions for the vehicle,
said control means (31) changing a timing of outputting the vehicle travel supporting information also in dependence of the detected road conditions.

4. Vehicle travel aiding device according to claim 3, characterized in that the means (35) for detecting road conditions for the vehicle are means for detecting that an average running speed is higher than a threshold value.

5. Vehicle travel aiding device according to claim 3 or 4, characterized in that the means (35) for detecting road conditions for the vehicle are means for detecting that a frequency of braking operations for a specified period is higher than a threshold value.

6. Vehicle travel aiding device according to one of claims 3 to 5, characterized in that the means (35) for detecting road conditions for the vehicle are means for detecting that a steering angle exceeds a specified value.

7. Vehicle travel aiding device according to one of claims 3 to 6, characterized in that the means (35) for detecting road conditions for the vehicle are means for detecting that a frequency of steering operations for a specified period is higher than a threshold value.

8. Vehicle travel aiding device according to one of claims 2 to 7, characterized in that said driver's operation being judged is an operation of the brake or of an accelerator.

9. Vehicle travel aiding device according to one of the preceeding claims, characterized in that said vehicle travel supporting information further includes an instruction to control an engine output when detecting an obstruction to the vehicle.

## Patentansprüche

1. Fahrzeugfahrhilfsvorrichtung, die mittels Sensormitteln (1, 2) Fahrzustände eines Fahrzeugs einschließlich Kollosionsrisikoerfassung erfaßt und Fahrzeugfahrunterstützungsinformation ausgibt, wobei die Information umfaßt:
- einen Alarm oder Instruktionen zum automatischen Betätigen von Bremsmitteln (8) des Fahrzeugs, wenn ein Hindernis für das Fahrzeug oder ein kurzer Abstand zu einem anderen Fahrzeug erfaßt wird und/oder
- Leitinstruktionen zum Leiten des Fahrzeugs,
gekennzeichnet durch
- Mittel (9, 20) zum Erfassen eines durch einen Scheinwerferschalter und/oder einen Wischerschalter gewählten Betriebszustands und
- Steuermittel (3; 31), die gemäß dem erfaßten Zustand des jeweiligen Schalters ein Timing des Ausgebens der Fahrzeugfahrunterstützungsinformation ändern und/oder gemäß dem erfaßten Zustand des jeweiligen Schalters einen Inhalt der Fahrzeugfahrunterstützungsinformation ändern, die ausgegeben wird.

2. Fahrzeugfahrhilfsvorrichtung nach Anspruch 1 ferner umfassend Mittel (32) zum Erfassen einer Betätigung durch den Fahrer und zum Beurteilen einer Betätigungsreaktion des Fahrers durch Messen eines Zeitintervalls von einem Moment des Ausgebens von Fahrzeugfahrunterstützungsinformation zu einem Moment des Erfassens, daß die Betätigung durchgeführt wird,
wobei die Steuermittel (31) ein Timing des Ausgebens der Fahrzeugfahrunterstützungsinformation ferner in Abhängigkeit von der beurteilten Reaktion der Betätigung durch den Fahrer ändern.

3. Fahrzeugfahrhilfsvorrichtung nach Anspruch 2, ferner umfassend Mittel (35) zum Erfassen von Straßenzuständen für das Fahrzeug, wobei die Steuermittel (31) ein Timing des Ausgebens der Fahrzeugfahrunterstützungsinformation ferner in Abhängigkeit von den erfaßten Straßenzuständen ändern.

4. Fahrzeugfahrhilfsvorrichtung nach Anspruch 3, dadurch gekennzeichnet, daß die Mittel (35) zum Erfassen von Straßenzuständen für das Fahrzeug Mittel sind zum Erfassen, daß eine mittlere Fahrgeschwindigkeit größer als ein Schwellenwert ist.

5. Fahrzeugfahrhilfsvorrichtung nach Anspruch 3 oder 4, dadurch gekennzeichnet, daß die Mittel (35) zum Erfassen von Straßenzuständen für das Fahrzeug Mittel sind zum Erfassen, daß eine Häufigkeit von Bremsbetätigungen für eine spezifizierte Periode größer als ein Schwellenwert ist.

6. Fahrzeugfahrhilfsvorrichtung nach einem der Ansprüche 3 bis 5, dadurch gekennzeichnet, daß die Mittel (35) zum Erfassen von Straßenzuständen für das Fahrzeug Mittel sind zum Erfassen, daß ein Lenkwinkel einen spezifizierten Wert überschreitet.

7. Fahrzeugfahrhilfsvorrichtung nach einem der Ansprüche 3 bis 6, dadurch gekennzeichnet, daß die Mittel (35) zum Erfassen von Straßenzuständen für das Fahrzeug Mittel sind zum Erfassen, daß eine Häufigkeit von Lenkoperationen für eine spezifizierte Periode größer als ein Schwellenwert ist.

8. Fahrzeugfahrhilfsvorrichtung nach einem der Ansprüche 2 bis 7, dadurch gekennzeichnet, daß die Betätigung durch den Fahrer, die beurteilt wird, eine Betätigung der Bremse oder eines Gaspedals ist.

9. Fahrzeugfahrhilfsvorrichtung nach einem der vorangehenden Ansprüche, dadurch gekennzeichnet, daß die Fahrzeugfahrunterstützungsinformation ferner eine Instruktion enthält zum Steuern/Regeln einer Motorausgangsgröße, wenn ein Hindernis für das Fahrzeug erfaßt wird.

## Revendications

1. Dispositif d'aide à la conduite d'un véhicule détectant les conditions de circulation d'un véhicule à l'aide de moyens capteurs (1, 2) comportant un système de détection de risque de collision et fournissant en sortie des informations d'aide à la conduite du véhicule, lesdites informations comprenant :
- une alarme ou des instructions destinées à faire fonctionner automatiquement des moyens (8) de freinage du véhicule lors de la détection d'un obstacle se présentant au véhicule ou d'une faible distance par rapport à un autre véhicule et/ou
- des instructions de guidage pour guider le véhicule,
- caractérisé par
- des moyens (9, 20) pour détecter un état de fonctionnement sélectionné par un commutateur de phare et/ou un commutateur d'essuie-glace et
- des moyens de commande (3 ; 31) modifiant un cadencement de délivrance des informations d'aide à la conduite du véhicule en fonction de l'état détecté du commutateur respectif et/ou, modifiant, en fonction de l'état détecté du commutateur respectif, un contenu des informations d'aide à la conduite du véhicule délivrées.

2. Dispositif d'aide à la conduite d'un véhicule selon la revendication 1, comprenant en outre des moyens (32) pour détecter une opération effectuée par un conducteur et évaluer une réactivité du conducteur en mesurant un intervalle de temps entre un moment où sont délivrées des informations d'aide à la conduite du véhicule et un moment où la détection de l'opération est effectuée,
lesdits moyens de commande (31) modifiant également un cadencement de la délivrance des informations d'aide à la conduite du véhicule en fonction de la réactivité évaluée du conducteur.

3. Dispositif d'aide à la conduite d'un véhicule selon la revendication 2, comprenant en outre des moyens (35) pour détecter des conditions routières pour le véhicule, lesdits moyens de commande (31) modifiant également un cadencement de délivrance des informations d'aide à la conduite du véhicule en fonction des conditions routières détectées.

4. Dispositif d'aide à la conduite d'un véhicule selon la revendication 3, caractérisé en ce que les moyens (35) de détection des conditions routières pour le véhicule sont des moyens destinés à détecter qu'une vitesse de déplacement moyenne est supérieure à une valeur de seuil.

5. Dispositif d'aide à la conduite d'un véhicule selon la revendication 3 ou 4, caractérisé en ce que les moyens (35) de détection des conditions routières pour le véhicule sont des moyens destinés à détecter qu'une fréquence d'opérations de freinage pendant une période spécifiée, est supérieure à une valeur de seuil.

6. Dispositif d'aide à la conduite d'un véhicule selon l'une des revendications 3 à 5, caractérisé en ce que les moyens (35) de détection des conditions routières pour le véhicule sont des moyens destinés à détecter qu'un angle de braquage dépasse une valeur spécifiée.

7. Dispositif d'aide à la conduite d'un véhicule selon l'une des revendications 3 à 6, caractérisé en ce que les moyens (35) de détection des conditions routières pour le véhicule sont des moyens de détection que la fréquence des opérations de braquage pendant une période spécifiée est supérieure à une valeur de seuil.

8. Dispositif d'aide à la conduite d'un véhicule selon l'une des revendications 2 à 7, caractérisé en ce que ladite opération effectuée par le conducteur soumis à l'évaluation, est un actionnement du frein ou d'un accélérateur.

9. Dispositif d'aide à la conduite d'un véhicule selon l'une des revendications précédentes, caractérisé en ce que lesdites informations d'aide à la conduite du véhicule comprennent en outre une instruction destinée à commander une puissance du moteur lors de la détection d'un obstacle se présentant au véhicule.
